# EUROPEAN PATENT SPECIFICATION

(11) **EP 4 340 595 B1**
(45) Date of publication and mention of the grant of the patent: **16.07.2025**
(21) Application number: 22728935.2
(22) Date of filing: 16.05.2022
(51) Int. Cl.: A01G 18/70

(54) **METHOD AND SYSTEM FOR OBTAINING A DECISION MODEL FOR PICKING OF MUSHROOMS**
VERFAHREN UND SYSTEM ZUM ERHALTEN EINES ENTSCHEIDUNGSMODELLS ZUM SAMMELN VON PILZEN
PROCÉDÉ ET SYSTÈME POUR OBTENIR UN MODELE DE DECISION POUR LA RECOLTE DE CHAMPIGNONS

(30) Priority: 17.05.2021 NL 2028227
(43) Date of publication of application: 27.03.2024
(73) Proprietor: Uylenbosch B.V., 3731 HA De Bilt (NL)
(72) Inventor: VAN OEFFELT, Abraham, 3731HA De Bilt (NL)
(74) Representative: IP Maison
(86) International application number: PCT/EP2022/063221
(87) International publication number: WO 2022/243260

(56) References cited:
- WO-A1-2006/111619
- WO-A1-2015/164958
- WO-A1-2020/097727
- KR-A- 20210 014 268
- KR-A- 20210 035 948
- US-A1- 2019 075 732
- JN REED, SJ MILES, J BUTLER, M BALDWIN, R NOBLE: "Automatic Mushroom Harvester Development", JOURNAL OF AGRICULTURAL ENGINEERING RESEARCH, vol. 78, no. 1, 00218634, 24 October 2000 (2000-10-24), pages 15 - 23, DOI: 10.1006/jaer.2000.0629

## Description

The present invention relates to a method and system for obtaining a decision model for picking for mushrooms from a bed.

At industrial scales, mushrooms are traditionally grown at indoor locations, often called growing rooms, wherein shelvings are placed that support so called beds for holding compost and casing soil, on which the mushrooms are grown.

The compost and casing soil are placed on pulling nets, that allow to fill and empty the bed with compost and casing soil easily. Usually, this is done after every two or three flushes of mushrooms, since the compost has lost its fertility and nutrition then.

Although harvesting machines, such as robots, exist, harvesting the mushrooms is often done manually, for several reasons.

A first reason is that the physical handling of a mushroom is delicate, on order not to damage the mushroom. When too much force is exerted on a mushroom, it may develop dark spots, and become less attractive for consumers, with a decrease of its value as a result. However, some machine picking devices that provide acceptable results have been proposed.

A second reason is that the choice what mushroom to pick and what mushroom to leave is a rather difficult one, that requires a lot of experience and decision making. Not only the mushroom cap size or diameter or its distance to adjacent mushrooms or a combination of these factors plays a role, but also the flush number, mushroom shape, orientation on the bed, condition of the bed and many other considerations may make an experienced harvester take the decision to pick one mushroom and leave the other.

Attempts have been made to comprise such considerations in a formula, and to automate at least the decision making process of mushroom harvesting.

One example of a system that provides harvesters information which mushroom to pick is described in the Korean patent application KR20210014268A. This publication describes that the growth of mushrooms is monitored and analyzed with machine learning and that a picking instruction is provided with a harvester. KR20210014268A neither discloses a decision model for determining what mushroom is to be picked, nor a way to obtain it. KR20210014268A does not mention steps A and C of claim 1 of the present invention. Since no picking operations are monitored, the machine learning cannot learn which mushrooms to pick from a harvester. Instead, predetermined picking instructions (such as size and the like), based on criteria with fixed values or known formulas must be used.

Also the Korean patent application KR20210035948A describes monitoring mushroom growth but remains silent about monitoring a harvester when picking and the way a picking decision model is obtained. As a result, also KR20210035948A lacks steps A and C of claim 1 of the present invention.

A further example hereof is given at:
http://www.advancedmushroomresearch.com/wp-content/uploads/2013/05/AMRSmartHarvest.pdf

This publication teaches to take multiple parameters into account, and to determine what mushrooms are to be picked based on predetermined criteria. Images are taken from the mushrooms, and image processing software is used to determine what mushroom should be picked. In order to recognize mushrooms automatically, the publisher also suggest to make use of fuzzy logic or neural networks. This is for image recognition purposes only however. The decision making model however is based on classic predetermined formulas. Once a decision for picking a mushroom is made, it is suggested to illuminate said mushroom, with a specific colour.

A more recent, but in fact less sophisticated solution is described in the European patent 3136836B1.

This patent suggests to determine mushrooms to be picked based on specific predetermined rules, relating to mushroom diameter and diameters of surrounding mushrooms, as well as their distance.

The above mentioned state of the art solutions have an important disadvantage however. The quality of the picking choice is dependent on the model used, and has shown to be way too simplistic to be applied in practice, especially when it comes to selecting first (best) class mushrooms over several flushes of the bed.

It is a goal of the present invention to take away the disadvantages of the prior art, or at least to provide a useful alternative to the prior art.

The invention thereto proposes a computer-implemented method for obtaining a decision model for picking mushrooms from a bed according to claim 1.

By making use of an unsupervised learning method, the disadvantageous dependency of predetermined rules and their simplicity is taken away, since the machine learning techniques do not determine a traditional function described in terms of input parameters and their output, but rather reproduce discovered patterns in data provided. The decision model thus obtained is therefore to be seen as a trained machine, or a software reproduction thereof in memory or on a storage, but the intrinsic property of artificial intelligence brings that the actual model does not become apparent to its user.

The advantage of the method may become clear when picking operations of an experienced harvester are used as its input. Without the need for the harvester to define his or her decision making "algorithm" in words or mathematical expressions, it can be learned by the machine and used to make decisions for less or none experienced harvesters, or even automated harvesting, for instance by a robot.

The method according to the invention may for that purpose further comprise the steps of:
D. Capturing an image of a to-be-picked bed with mushrooms
E. Using the decision model to indicate which mushroom should be picked from the to-be-picked bed.

Which can be seen as making use of the above described method with some extra steps.

Step A may take place by means of at least one camera mounted on a picking lorry, irrigation system or a guide, for moving along with the picker. A designated moving system may be applied too, and even autonomous camera movement, be it guided of unguided, by a drone or the like, can be applied.

Since machine learning does not necessarily take place from the actual picking itself, but rather from the situation before and after picking, so "the missing mushrooms" after picking, it is beneficial when step A comprises capturing a picture comprising the same area of the bed before and after picking. This can be done by moving the same camera over the bed twice, or by using two cameras, wherein one of which precedes the harvester, and the other follows the harvester.

Steps B and C may take place by means of deep learning, in particular based on Nvidia Dave 2 network topology, which was experimentally determined to provide good results with the method according to the invention.

Alternatively and/or additionally, step B may take place based on cluster analysis by means of one of hierarchical clustering, k-means, mixture models, DBSCAN, or OPTICS algorithm.

Step E may comprise indicating which mushroom should be picked in a way that can be interpreted by a human, such as an illumination of the mushroom to be picked, in a way similar to the one disclosed by advanced mushroomresearch or by virtual or augmented reality.

Step E may also comprise indicating which mushroom should be picked to a picking machine such as a picking robot.

Steps A-C may be repeated for first, second and third flushes of mushrooms on a bed, in order to adapt the model to recognise the flush number and adapt its decisions based thereon.

The decision model may regularly or continuously be updated, based on additional images of picking operations of mushrooms from at least one bed. It is also thinkable that data from multiple beds is used, in a "big data" way, wherein data collection takes place at various sites and times and is aggregated for machine learning purposes.

The invention also relates to a system configured for obtaining a decision model for picking mushrooms from a bed according to claim 10.

Such system may be used to perform the above described method.

The invention also concerns a system for picking mushrooms from a bed according to claim 11.

The camera may be mounted on or coupled to a picking lorry, an irrigation system or to a guide for moving the camera in a length direction over the bed, and there may be even two (or more) cameras applied, separated in a length direction of the bed.

The means for indicating which mushroom should be picked from a bed may comprise means for visually marking mushrooms with light, or for generating instruction data for a picking robot.

The above description serves as an explanation only and in no sense to limit the scope of the invention, as defined in the following claims.

## Claims

1. A computer-implemented method for obtaining a decision model for picking for mushrooms from a bed, **characterized by** comprising the steps of:
A. Repeatedly capturing images of picking operations of mushrooms from the same area of at least one bed before and after picking;
B. Analysing the picking operation images by means of unsupervised learning, in particular machine learning by means of cluster analysis;
C. Based on the analysis, obtaining a decision model for picking mushrooms from a bed.

2. Method according to claim 1, further comprising the steps of:
D. Capturing an image of a to-be picked bed with mushrooms;
E. Using the decision model to indicate which mushroom should be picked from the to-be-picked bed.

3. Method according to claim 1 or 2, wherein step A takes place by means of at least one camera mounted on a picking lorry, irrigation system or a guide, for moving along with a picker.

4. Method according to any of the preceding claims, wherein steps B and C take place by means of deep learning, in particular based on Nvidia Dave 2 network topology.

5. Method according to any of the preceding claims, wherein step B takes place based on cluster analysis by means of one of hierarchical clustering, k-means, mixture models, DBSCAN, or OPTICS algorithm.

6. Method according to claim 2 or claims 3-5 when dependent on claim 2, wherein step E comprises indicating which mushroom should be picked in a way that can be interpreted by a human, such as an illumination of the mushroom to be picked.

7. Method according to claim 2 or claims 3-5 when dependent on claim 2, wherein step E comprises indicating which mushroom should be picked to a picking machine such as a picking robot.

8. Method according to any of the preceding claims, comprising repeating steps A-C for first, second and third flushes of mushrooms on a bed.

9. Method according to any of the preceding claims comprising updating the decision model based on additional images of picking operations of mushrooms from at least one bed.

10. System configured for obtaining a decision model for picking mushrooms from a bed by a method according to any of the preceding claims, the system comprising:
- A bed with mushrooms;
- At least one camera, configured for capturing images of picking operations of mushrooms from the bed;
- At least one data processor for:
∘ analysing the images of picking operations by means of unsupervised learning, in particular machine learning by means of cluster analysis;
∘ Based on the analysis, obtaining a decision model for picking mushrooms from a bed.

11. System for picking mushrooms from a bed, comprising:
- Storage means like a computer memory comprising a decision model obtained by a method according to any of claims 1-9 or by a system according to claim 10;
- At least one camera for capturing an image of a to be picked bed with mushrooms;
- Processing means for using the decision model to indicate which mushroom should be picked from the to-be-picked bed based on an image obtained from the camera;
- Means for indicating which mushroom should be picked from the to-be-picked bed.

12. System according to claim 10 or 11, wherein the at least one camera is mounted on or coupled to a picking lorry, an irrigation system or to a guide for moving the camera in a length direction over the bed.

13. System according to claim 12, comprising two cameras separated in a length direction of the bed.

14. System according to claim 13, wherein the means for indicating which mushroom should be picked from a bed comprise means for visually marking mushrooms with light or for generating instruction data for a picking robot.

## Patentansprüche

1. Computer-implementiertes Verfahren zum Erhalten eines Entscheidungsmodells zum Pflücken von Pilzen aus einem Beet, **dadurch gekennzeichnet, dass** es die Schritte aufweist:
A. Wiederholtes Aufnehmen von Bildern von Vorgängen des Pflückens von Pilzen aus demselben Bereich zumindest eines Beets vor und nach dem Pflücken;
B. Analysieren der Bilder von Vorgängen des Pflückens mittels unüberwachten Lernens, insbesondere maschinellen Lernens mittels Clusteranalyse;
C. Erhalten eines Entscheidungsmodells zum Pflücken von Pilzen aus einem Beet auf Grundlage der Analyse.

2. Verfahren nach Anspruch 1, weiter aufweisend die Schritte des:
D. Aufnehmens eines abzupflückenden Beets mit Pilzen;
E. Nutzens des Entscheidungsmodells, um anzugeben, welcher Pilz aus dem abzupflückenden Beet gepflückt werden soll.

3. Verfahren nach Anspruch 1 oder 2, bei dem Schritt A mittels zumindest einer Kamera erfolgt, die auf einem Pflückwagen, einem Bewässerungssystem oder einer Führung angebracht ist, die sich mit einem Pflücker zusammen bewegt.

4. Verfahren nach einem der vorhergehenden Ansprüche, wobei die Schritte B und C mittels Deep Learning erfolgen, insbesondere auf Grundlage von Nvidia Dave 2 - Netzwerktopologie.

5. Verfahren nach einem der vorhergehenden Ansprüche, wobei Schritt B auf Grundlage von Clusteranalyse mittels eines aus hierarchischem Clustern, k-Means-Algorithmus, gemischten Modellen, dichtebasierter räumlicher Clusteranalyse mit Rauschen, DBSCAN, oder einem Algorithmus mit Punkte-Ordnen, um die Clusterstruktur zu identifizieren, OPTICS, erfolgt.

6. Verfahren nach Anspruch 2 oder einem der Ansprüche 3 bis 5 in deren Abhängigkeit von Anspruch 2, wobei Schritt E das Angeben, welcher Pilz gepflückt werden soll, auf eine Weise aufweist, die für einen Menschen verständlich ist, wie etwa durch Beleuchten des zu pflückenden Pilzes.

7. Verfahren nach Anspruch 2 oder einem der Ansprüche 3 bis 5 in deren Abhängigkeit von Anspruch 2, wobei Schritt E das Angeben, welcher Pilz gepflückt werden soll, für eine Pflückmaschine, wie etwa einen Pflückroboter, aufweist.

8. Verfahren nach einem der vorhergehenden Ansprüche, aufweisend das Wiederholen der Schritte A-C bei ersten, zweiten und dritten Pilz-Flushes in einem Beet.

9. Verfahren nach einem der vorhergehenden Ansprüche, aufweisend ein Updaten des Entscheidungsmodells auf Grundlage weiterer Bilder von Vorgängen des Pflückens von Pilzen aus zumindest einem Beet.

10. System, welches zum Erhalten eines Entscheidungsmodells zum Pflücken von Pilzen aus einem Beet mittels des Verfahrens nach einem der vorhergehenden Ansprüche ausgelegt ist, wobei das System aufweist:
- Ein Beet mit Pilzen;
- Zumindest eine Kamera, die zum Aufnehmen von Bildern von Vorgängen des Pflückens von Pilzen aus dem Beet eingerichtet ist;
- Zumindest einen Datenverarbeiter zum:
∘ Analysieren der Bilder von Vorgängen des Pflückens mittels unüberwachten Lernens, insbesondere maschinellen Lernens mittels Clusteranalyse;
∘ Erhalten eines Entscheidungsmodells zum Pflücken von Pilzen aus einem Beet auf Grundlage der Analyse.

11. System zum Pflücken von Pilzen aus einem Beet, aufweisend:
- Eine Speichereinrichtung wie etwa einen Computerspeicher, aufweisend ein Entscheidungsmodell, das durch das Verfahren nach einem der Ansprüche 1-9 oder durch das System nach Anspruch 10 erlangt worden ist;
- Zumindest eine Kamera zum Aufnehmen eines Bildes eines abzupflückenden Beets mit Pilzen;
- Eine Datenverarbeitungseinrichtung zum Nutzen des Entscheidungsmodells zum Angeben auf Grundlage eines mit der Kamera erlangten Bildes, welcher Pilz von dem abzupflückenden Beet abgepflückt werden soll;
- Mittel zum Angeben, welcher Pilz von dem abzupflückenden Beet gepflückt werden soll.

12. System nach Anspruch 10 oder 11, wobei die zumindest eine Kamera angebracht ist an oder gekoppelt ist mit einem Pflückwagen, einem Bewässerungssystem oder einer Führung zum Bewegen der Kamera in Längsrichtung über das Beet.

13. System nach Anspruch 12, aufweisend zwei Kameras, die in einer Längsrichtung des Beets voneinander beabstandet sind.

14. System nach Anspruch 13, wobei die Mittel zum Angeben, welcher Pilz von einem Beet gepflückt werden soll, Mittel zum visuellen Hervorheben von Pilzen mit Licht oder zum Erzeugen von Instruktionsdaten für einen Pflückroboter aufweisen.

## Revendications

1. Procédé mis en œuvre par ordinateur pour obtenir un modèle de décision pour la récolte de champignons d'une couche, **caractérisé en ce qu'**il comprend les étapes consistant à :
A. Capturer de manière répétée des images d'opérations de récolte de champignons de la même zone d'au moins une couche avant et après la récolte ;
B. Analyser les images des opérations de récolte au moyen d'un apprentissage non supervisé, en particulier l'apprentissage automatique au moyen d'une analyse par groupe ; et
C. Obtenir, à partir de l'analyse, un modèle de décision pour la récolte de champignons d'une couche.

2. Procédé selon la revendication 1, comprenant en outre les étapes consistant à :
D. Capturer une image d'une couche de champignons à récolter ; et
E. Utiliser le modèle de décision pour indiquer quel champignon doit être récolté de la couche de champignons à récolter.

3. Procédé selon la revendication 1 ou 2, dans lequel l'étape A a lieu au moyen d'au moins une caméra agencée sur un camion de récolte, un système d'irrigation ou un guide, pour se déplacer avec un cueilleur.

4. Procédé selon l'une quelconque des revendications précédentes, dans lequel les étapes B et C ont lieu au moyen d'un apprentissage profond, en particulier basé sur la topologie de réseau Nvidia Dave 2.

5. Procédé selon l'une quelconque des revendications précédentes, dans lequel l'étape B a lieu à partir d'une analyse par groupe au moyen de l'un des algorithmes suivants : regroupement hiérarchique, k-means, modèles de mélange, DBSCAN, ou OPTICS.

6. Procédé selon l'une quelconque des revendications précédentes, dans lequel l'étape E comprend la fourniture d'une information de quel champignon devrait être récolté, délivrée d'une manière compréhensible par un humain, telle qu'un éclairage du champignon à récolter.

7. Procédé selon l'une quelconque des revendications précédentes, dans lequel l'étape E comprend la fourniture d'une information de quel champignon à récolter à une machine de récolte, telle qu'un robot de récolte.

8. Procédé selon l'une quelconque des revendications précédentes, comprenant la répétition des étapes A-C pour des première, deuxième et troisième pousses de champignons sur une couche.

9. Procédé selon l'une quelconque des revendications précédentes, comprenant la mise à jour du modèle de décision à partir d'images supplémentaires d'opérations de récolte de champignons d'au moins une couche.

10. Système configuré pour obtenir un modèle de décision pour la récolte de champignons d'une couche par un procédé selon l'une quelconque des revendications précédentes, le système comprenant :
- Une couche de champignons ;
- Au moins une caméra agencée pour capturer des images d'opérations de récolte de champignons de la couche ;
- Au moins une unité de traitement de données pour :
∘ Analyser les images des opérations de récolte au moyen d'un apprentissage non supervisé, en particulier l'apprentissage automatique au moyen d'une analyse par groupe ; et
∘ Obtenir, à partir de l'analyse, un modèle de décision pour la récolte de champignons d'une couche.

11. Système pour la récolte de champignons d'une couche, comprenant :
- Des moyens de stockage tels qu'une mémoire d'ordinateur comprenant un modèle de décision obtenu par un procédé selon l'une quelconque des revendications 1-9 ou par un système selon la revendication 10 ;
- Une première caméra pour capturer une image d'un lit de champignons à récolter ;
- Des moyens de traitement de données pour utiliser le modèle de décision afin de fournir une information de quel champignon doit être récolté de la couche à partir d'une image obtenue de la caméra ; et
- Des moyens pour indiquer quel champignon doit être récolté d'une couche.

12. Système selon la revendication 10 ou 11, dans lequel la première caméra est agencée sur, ou couplée à, un camion de récolte, un système d'irrigation ou à un guide, pour déplacer la caméra dans une direction longitudinale de la couche.

13. Système selon la revendication 12, comprenant une deuxième caméra agencée séparément de la première caméra dans la direction longitudinale de la couche.

14. Système selon la revendication 13, dans lequel les moyens de traitement des données, qui sont agencés pour fournir une information de quel champignon doit être récolté d'une couche, comprennent des moyens pour marquer visuellement les champignons avec de la lumière, ou pour générer des données d'instruction pour un robot de récolte.
